# EUROPÄISCHE PATENTSCHRIFT

(11) **EP 1 746 263 B1**
(45) Veröffentlichungstag und Bekanntmachung des Hinweises auf die Patenterteilung: **12.10.2011**
(21) Anmeldenummer: 06014334.4
(22) Anmeldetag: 11.07.2006
(51) Int. Cl.: F01N 3/02, F02M 25/07

(54) **Wärmeübertragerventileinrichtung**
Valve system for a heat exchanger
Système de soupape pour un échangeur de chaleur

(30) Priorität: 19.07.2005 DE 102005034135; 30.08.2005 DE 102005041150
(43) Veröffentlichungstag der Anmeldung: 24.01.2007
(73) Patentinhaber: Behr GmbH & Co. KG, 70469 Stuttgart (DE); Behr Thermot-tronik GmbH, 70806 Kornwestheim (DE)
(72) Erfinder: Buschatz, Immanuel, 72669 Unterensingen (DE); Friesenhahn, Waldemar, 70806 Kornwestheim (DE); Klein, Hans-Peter, 71397 Leutenbach (DE); Kunze, Jürgen, 71277 Rutesheim (DE); Ruckwied, Jens, 70195 Stuttgart (DE); Stiegler, Martin, 73110 Hattenhofen (DE); Willers, Eike, 70469 Stuttgart (DE)
(74) Vertreter: Grauel, Andreas

(56) Entgegenhaltungen:
- DE-A1- 10 312 350
- DE-A1- 19 932 313
- DE-B3- 10 341 393
- JP-A- 2003 278 609

## Beschreibung

Die Erfindung betrifft eine Wärmeübertragerventileinrichtung zum Regeln eines Fluidstroms, wie eines Abgas- oder Ladeluftstroms, mit einem Ventilgehäuse, das einen Eingang für den Fluidstrom und einen Wärmeübertragerausgang aufweist, durch den einem Wärmeübertrager, wie einem Kühler, in Abhängigkeit von der Stellung eines Ventilkörpers ein mehr oder weniger großer Fluidstrom zugeführt wird.

In herkömmlichen Abgassystemen wird zum Regeln des Abgasstroms ein Abgasregelventil verwendet. Zum Verteilen des Abgases wird eine Abgasklappe verwendet, die den Abgasstrom entweder durch den Kühler oder durch einen Bypass am Kühler vorbei leitet.

Die DE 10341393 B3 offenbart ein Luftansaugkanalsystem für eine Verbrennungsmaschine mit Kanälen für Abgas und mit Ventilen zur Steuerung.

Aufgabe der Erfindung ist es, eine verbesserte Wärmeübertragerventileinrichtung gemäß dem Oberbegriff des Anspruchs 1 zu schaffen, die einfach aufgebaut und kostengünstig herstellbar ist.

Die Aufgabe ist bei einer eine Wärmeübertragerventileinrichtung zum Regeln eines Abgas- oder Ladeluftstroms, mit einem Ventilgehäuse, das einen Eingang für den Fluidstrom und einen Wärmeübertragerausgang aufweist, durch den einem Wärmeübertrager, insbesondere einem Kühler, in Abhängigkeit von der Stellung eines Ventilkörpers ein mehr oder weniger großer Fluidstrom zugeführt wird, dadurch gelöst, dass das Ventilgehäuse einen weiteren Bypassausgang, aufweist, durch den in Abhängigkeit von der Stellung einer Ventilscheibe, die verdrehbar in dem Ventilgehäuse aufgenommen ist, ein mehr oder weniger großer Fluidstrom an dem Wärmeübertrager vorbei geleitet wird und die verdrehbare Ventilscheibe eine Fluiddurchgangsöffnung aufweist, die durch Verdrehen zumindest teilweise mit einer von zwei weiteren Fluiddurchgangsöffnungen zur Deckung bringbar ist.

Gemäß einem wesentlichen Aspekt der Erfindung werden die Funktionen Regeln und Verteilen des Fluidstroms in einer einzigen Ventileinrichtung zusammengefasst. Mit der erfindungsgemäßen Wärmeübertragerventileinrichtung ist es möglich, den durch den Eingang in das Ventilgehäuse eintretenden Fluidstrom geregelt zu dem Wärmeübertragerausgang oder zu dem Bypassausgang zu leiten. Gemäß einem weiteren Aspekt der Erfindung kann der Eingang mit der Ventilscheibe auch komplett geschlossen werden. Die Ventilscheibe kann auch als Ventilkörper bezeichnet werden. Die Ventilscheibe wird durch elektrische Steiler, insbesondere elektromagnetische Steller, oder durch pneumatische Steiler, insbesondere eine Unterdruckdose, betätigt. Die herkömmliche Abgasklappe kann entfallen.

Ein bevorzugtes Ausführungsbeispiel der Wärmeübertragerventileinrichtung ist dadurch gekennzeichnet, dass die Ventilscheibe zwischen einer ersten Öffnungsstellung, in welcher der weitere Ausgang geschlossen und der Wärmeübertragerausgang geöffnet ist, und einer zweiten Öffnungsstellung verdrehbar ist, in welcher der weitere Ausgang geöffnet und der Wärmeübertragerausgang geschlossen ist. Durch die verdrehbare Ventilscheibe kann auch bei hohen Drücken eine ausreichende Dichtigkeit gewährleistet werden.

Ein weiteres bevorzugtes Ausführungsbeispiel der Wärmeübertragerventileinrichtung ist dadurch gekennzeichnet, dass in einer weiteren Ventilstellung der Ventilscheibe der weitere Ausgang und der Wärmeübertragerausgang geschlossen sind.

Ein weiteres bevorzugtes Ausführungsbeispiel der Wärmeübertragerventileinrichtung ist dadurch gekennzeichnet, dass in einer weiteren Ventilstellung der Ventilscheibe der weitere Ausgang und der Wärmeübertragerausgang teilweise geöffnet sind.

Ein weiteres bevorzugtes Ausführungsbeispiel der Wärmeübertragerventileinrichtung ist dadurch gekennzeichnet, dass in einer weiteren Ventilstellung der Ventilscheibe der weitere Ausgang und der Wärmeübertragerausgang geöffnet sind.

Ein weiteres bevorzugtes Ausführungsbeispiel der Wärmeübertragerventileinrichtung ist dadurch gekennzeichnet, dass in einer weiteren Ventilstellung der Ventilscheibe der weitere Ausgang geöffnet und der Wärmeübertragerausgang geschlossen ist.

Ein weiteres bevorzugtes Ausführungsbeispiel der Wärmeübertragerventileinrichtung ist dadurch gekennzeichnet, dass in einer weiteren Ventilstellung der Ventilscheibe der Wärmeübertrageausgang geöffnet und der weitere Ausgang geschlossen ist.

Ein weiteres bevorzugtes Ausführungsbeispiel der Wärmeübertragerventileinrichtung ist dadurch gekennzeichnet, dass die zwei weiteren Fluiddurchgangsöffnungen in einer relativ zu dem Ventilgehäuse feststehenden Ventilscheibe vorgesehen sind. Die drei Fluiddurchgangsöffnungen sind vorzugsweise deckungsgleich zueinander ausgebildet.

Ein weiteres bevorzugtes Ausführungsbeispiel der Wärmeübertragerventileinrichtung ist dadurch gekennzeichnet, dass eine der Fluiddurchgangsöffnungen in der feststehenden Ventilscheibe mit dem Wärmeübertragerausgang und die andere Fluiddurchgangsöffnung mit dem weiteren Ausgang in Verbindung steht. In Abhängigkeit von der Überdeckung der Fluiddurchgangsöffnungen in den Ventilscheiben gelangt mehr oder weniger oder gar kein Fluid zu dem weiteren Ausgang beziehungsweise dem Wärmeübertragerausgang.

Ein weiteres bevorzugtes Ausführungsbeispiel der Wärmeübertragerventileinrichtung ist dadurch gekennzeichnet, dass die feststehende Ventilscheibe eine Vertiefung aufweist, in der die verdrehbare Ventilscheibe geführt ist.

Das liefert den Vorteil, dass auf eine Ventilscheibenführung an dem Ventilgehäuse verzichtet werden kann.

Ein weiteres bevorzugtes Ausführungsbeispiel der Wärmeübertragerventileinrichtung ist dadurch gekennzeichnet, dass die feststehende Ventilscheibe ein Außengewinde aufweist, mit dem die feststehende Ventilscheibe in ein komplementär ausgebildetes Innengewinde des Ventilgehäuses eingeschraubt ist. Dadurch wird die Montage der feststehenden Ventilscheibe vereinfacht.

Ein weiteres bevorzugtes Ausführungsbeispiel der Wärmeübertragerventileinrichtung ist dadurch gekennzeichnet, dass von der verdrehbaren Ventilscheibe eine Aktorstange ausgeht. Durch die Aktorstange, die vorzugsweise aus dem Ventilgehäuse heraus geführt ist, wird die Betätigung der verdrehbaren Ventilscheibe vereinfacht.

Ein weiteres bevorzugtes Ausführungsbeispiel der Wärmeübertragerventileinrichtung ist dadurch gekennzeichnet, dass die Ventilscheiben zumindest teilweise aus Keramik gebildet sind. Anstelle von Keramik kann auch Edelstahl verwendet werden.

Die Erfindung betrifft auch ein Abgasrückführsystem mit einer Brennkraftmaschine, insbesondere einem Motor, der beziehungsweise dem an einer Entnahmestelle abgezweigtes und über eine Rückführstelle zurückgeführtes Abgas zugeführt wird. Die oben angegebene Aufgabe ist bei dem Abgasrückführsystem dadurch gelöst, dass zwischen die Entnahmestelle und die Rückführstelle eine vorab beschriebene Wärmeübertragerventileinrichtung geschaltet ist.

Ein bevorzugtes Ausführungsbeispiel des Abgasrückführsystems ist dadurch gekennzeichnet, dass die Wärmeübertragerventileinrichtung mit einer Abgaskühleinrichtung verbunden ist. Die Abgaskühleinrichtung dient dazu, die Temperatur des rückgeführten Abgases abzusenken. Die Wärmeübertragerventileinrichtung kann stoffschlüssig oder mechanisch an die Abgaskühleinrichtung angebunden sein.

Ein weiteres bevorzugtes Ausführungsbeispiel des Abgasrückführsystems ist dadurch gekennzeichnet, dass die Wärmeübertragerventileinrichtung in die Abgaskühleinrichtung integriert ist. Es ist zum Beispiel vorteilhaft, wenn das Gehäuse beziehungsweise die Abströmseite der Wärmeübertragerventileinrichtung direkt den Eintritts- beziehungsweise Austrittsdiffusor der Abgaskühleinrichtung bildet.

Ein weiteres bevorzugtes Ausführungsbeispiel des Abgasrückführsystems ist dadurch gekennzeichnet, dass die Wärmeübertragerventileinrichtung stoffschlüssig mit der Abgaskühleinrichtung verbunden ist. Alternativ kann die Wärmeübertragerventileinrichtung mechanisch mit der Abgaskühleinrichtung verbunden sein.

Ein weiteres bevorzugtes Ausführungsbeispiel des Abgasrückführsystems ist dadurch gekennzeichnet, dass die Wärmeübertragerventileinrichtung einen Bypass aufweist. Der Bypass dient dazu, zum Beispiel bei einem Kaltstart des Motors, das rückgeführte Abgas ungekühlt an der Abgaskühleinrichtung vorbeizuleiten.

Ein weiteres bevorzugtes Ausführungsbeispiel des Abgasrückführsystems ist dadurch gekennzeichnet, dass die Abgaskühleinrichtung einen U-Flow-Kühler umfasst. Der U-Flow-Kühler ist so an die Wärmeübertragerventileinrichtung angeschlossen, dass das zurückgeführte Abgas zum einen ungekühlt am Kühler vorbei durch die Wärmeübertragerventileinrichtung geleitet werden kann. Zum anderen kann das rückgeführte Abgas mittels der Wärmeübertragerventileinrichtung durch den U-Flow-Kühler hindurch geleitet und so abgekühlt rückgeführt werden. Der U-Flow-Kühler liefert den Vorteil, dass ein Bypass entfallen kann.

Ein weiteres bevorzugtes Ausführungsbeispiel des Abgasrückführsystems ist dadurch gekennzeichnet, dass die Wärmeübertragerventileinrichtung, in Strömungsrichtung von der Entnahmestelle zu der Rückführstelle betrachtet, stromaufwärts oder stromabwärts zu der Abgaskühleinrichtung angeordnet ist. Die Wärmeübertragerventileinrichtung kann demzufolge sowohl vor als auch hinter der Abgaskühleinrichtung angeordnet sein.

Ein weiteres bevorzugtes Ausführungsbeispiel des Abgasrückführsystems ist dadurch gekennzeichnet, dass die Wärmeübertragerventileinrichtung einen Hochtemperatur-Abgaskühler und einen Niedertemperatur-Abgaskühler umfasst. Je nach Anwendung kann die zweistufige Abkühlung vorteilhaft sein. Ein weiteres bevorzugtes Ausführungsbeispiel des Abgasrückführsystems ist dadurch gekennzeichnet, dass die Wärmeübertragerventileinrichtung, in Strömungsrichtung von der Entnahmestelle zu der Rückführstelle betrachtet, stromaufwärts oder stromabwärts zu dem Hochtemperatur-Abgaskühler oder dem Niedertemperatur-Abgaskühler angeordnet ist. Die Wärmeübertragerventileinrichtung kann also vor oder hinter dem Hochtemperatur-Abgaskühler beziehungsweise Niedertemperatur-Abgaskühler angeordnet sein. Die Wärmeübertragerventileinrichtung kann aber auch zwischen dem Hochtemperatur-Abgaskühler und dem Niedertemperatur-Abgaskühler angeordnet sein.

Ein weiteres bevorzugtes Ausführungsbeispiel des Abgasrückführsystems ist dadurch gekennzeichnet, dass das Abgasrückführsystem von einem Hochdruck-Abgasrückführsystem gebildet wird. Das Hochdruck-Abgasrückführsystem kann mit einer einstufigen oder mit einer zweistufigen Abkühlung ausgestattet sein.

Ein weiteres bevorzugtes Ausführungsbeispiel des Abgasrückführsystems ist dadurch gekennzeichnet, dass das Abgasrückführsystem von einem Niederdruck-Abgasrückführsystem gebildet wird. Das Niederdruck-Abgasrückführsystem kann mit einer einstufigen oder mit einer zweistufigen Abkühlung ausgestattet sein.

Die Erfindung betrifft auch einen Wärmeübertrager mit einer vorab beschriebenen Wärmeübertragerventileinrichtung.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: ein Hochdruck-Abgasrückführsystem mit einer einstufigen Abkühlung, die einen Bypass umfasst;
- Figur 2: ein Hochdruck-Abgasrückführsystem mit einer einstufigen Abkühlung mit einem U-Flow-Kühler,
- Figur 3: ein Hochdruck-Abgasrückführsystem mit einer zweistufigen Abkühlung;
- Figur 4: ein Niederdruck-Abgasrückführsystem mit einer einstufigen Abkühlung, die einen Bypass umfasst;
- Figur 5: ein Niederdruck-Abgasrückführsystem mit einer einstufigen Abkühlung mit einem U-Flow-Kühler;
- Figur 6: ein Niederdruck-Abgasrückführsystem mit einer zweistufigen Abkühlung;
- Figur 7: die Ansicht eines Längsschnitts durch eine erfindungsgemäße Wärmeübertragerventileinrichtung;
- Figur 8: die Ansicht eines Schnitts entlang der Linie II-II in Figur 1;
- Figur 9: eine Untersicht der in Figur 1 dargestellten Wärmeübertragerventileinrichtung und
- Figur 10: einen Ventilteller mit einem Zahnradantrieb im Schnitt.

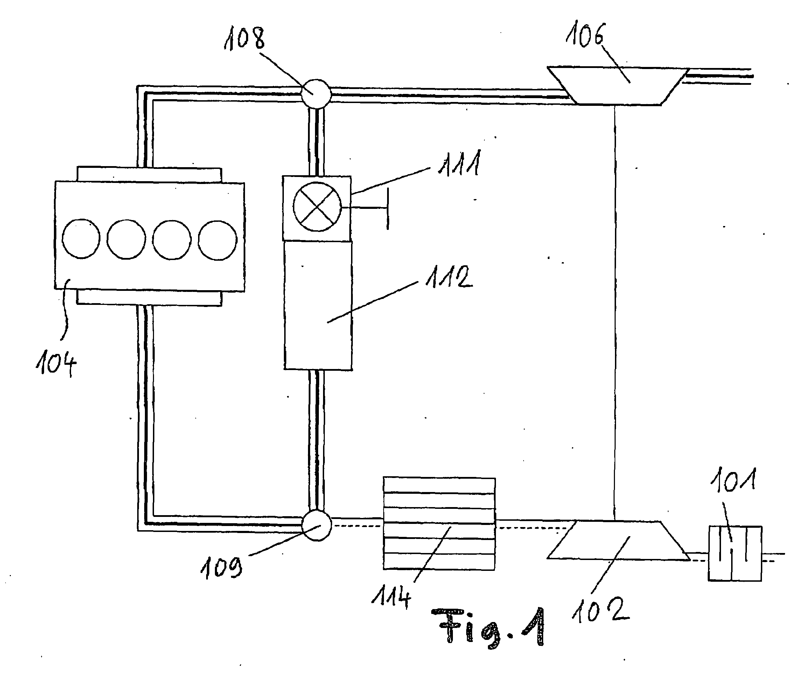

In den Figuren 1 bis 3 sind verschiedene Ausführungsbeispiele eines Hochdruck-Abgasrückführsystems vereinfacht dargestellt. Gleiche Teile sind mit gleichen Bezugszeichen versehen. Die Leistung eines Verbrennungsmotors hängt von Hubraum, Drehzahl und mittlerem Gasdruck ab. Durch eine Aufladung des Motors kann die Füllung erheblich verbessert und damit die Motorleistung gesteigert werden. Das Kraftstoff-Luftgemisch oder die Luft wird ganz oder teilweise außerhalb des Zylinders vorverdichtet. Bei einem Motor mit Abgasturbolader treiben die Abgase die Turbine und diese den Verdichter an. Der Verdichter übernimmt das Ansaugen und liefert dem Motor eine vorverdichtete Frischgasladung. Ein Ladeluftkühler in der Ladeleitung führt die Verdichtungswärme an die Umgebungsluft ab. Dadurch wird die Zylinderfüllung weiter verbessert.

Die Abgasrückführung dient dazu, das Abgas möglichst weit abzukühlen. Das zurückgeführte Abgas nimmt an der Verbrennung in der Brennkraftmaschine nicht mehr teil, erwärmt sich aber. Insgesamt wird durch das rückgeführte Abgas die Temperatur in der Brennkraftmaschine beziehungsweise dem Motor abgesenkt. Durch niedrige Temperaturen im Motor kann die Entstehung von Stickoxiden, die stark von der Temperatur im Motor abhängig ist, reduziert werden.

Das Kraftstoff-Luftgemisch wird über einen Luftfilter 101 von einem Verdichter 102 angesaugt und einem Motor 104 zugeführt. Von dem Motor 104 gelangt das Abgas zu einer Turbine 106, die den Verdichter 102 antreibt. Zwischen dem Motor 104 und der Turbine 106, die auch als Turboladerturbine bezeichnet wird, ist eine Entnahmestelle 108 vorgesehen, die mit einer Rückführstelle 109 in Verbindung steht. Über die Rückführstelle 109 wird das Abgas wieder dem Motor 104 zugeführt. Zwischen der Entnahmestelle 108 und der Rückführstelle 109 ist ein erfindungsgemäßes Wärmeübertragerventil 111, das auch als Kombinationsventil bezeichnet wird, angeordnet. Das Kombinationsventil 111 steht mit einem Abgaskühler 112 in Verbindung, der einen Bypass umfasst. Dieser Bypass ist einteilig mit dem Kühlergehäuse ausgeführt. In einer weiteren nicht dargestellten Ausführung ist der Bypass insbesondere als eine separate Rohrleitung ausgeführt, die den Kühler umgeht. Zwischen den Verdichter 102 und die Rückführstelle 109 ist ein Ladeluftkühler 114 geschaltet.

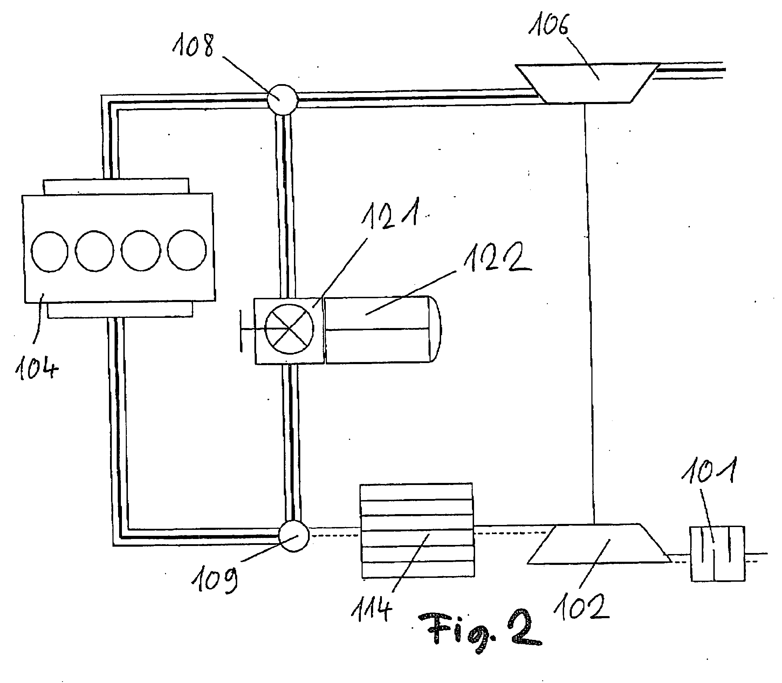

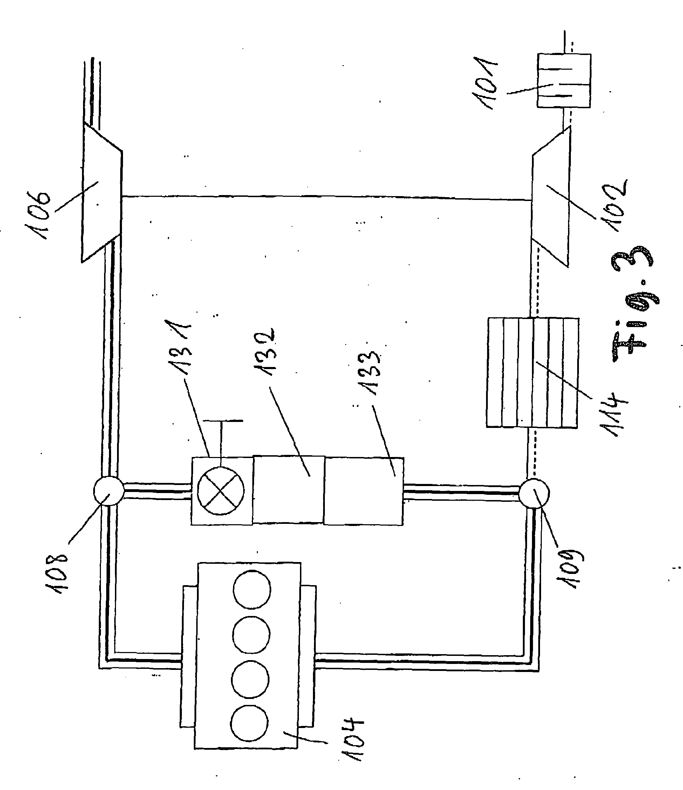

Die in den Figuren 2 und 3 dargestellten Hochdruck-Abgasrückführsysteme ähneln dem in Figur 1 dargestellten Abgasrückführsystem. Zur Bezeichnung gleicher Teile werden gleiche Bezugszeichen verwendet. Um Wiederholungen zu vermeiden, wird auf die vorangegangene Beschreibung der Figur 1 verwiesen. Im Folgenden wird nur auf die Unterschiede zwischen den einzelnen Ausführungsbeispielen eingegangen.

Bei dem in Figur 2 dargestellten Hochdruck-Abgasrückführsystem ist zwischen die Entnahmestelle 108 und die Rückführstelle 109 ein erfindungsgemäßes Wärmeübertragerventil 121 geschaltet, das auch als Kombinationsventil bezeichnet wird. Das Kombinationsventil 121 steht mit einem U-Flow-Kühler in Verbindung. Je nach Schaltstellung des Kombinationsventils 121 gelangt das rückgeführte Abgas entweder direkt durch das Kombinationsventil 121 ungekühlt von der Entnahmestelle 108 zur Rückführstelle 109, oder das rückgeführte Abgas wird mittels des Kombinationsventils in den U-Flow-Kühler 122 geleitet, in dem U-Flow-Kühler 122 gekühlt und gelangt dann erst zur Rückführstelle 109.

Bei dem in Figur 3 dargestellten Hochdruck-Abgasrückführsystem ist zwischen der Entnahmestelle 108 und der Rückführstelle 109 ein Kombinationsventil 131 mit einer zweistufigen Abkühleinrichtung angeordnet, die einen Hochtemperatur-Abgaskohler 132 und einen Niedertemperatur-Abgaskühler 133 umfasst.

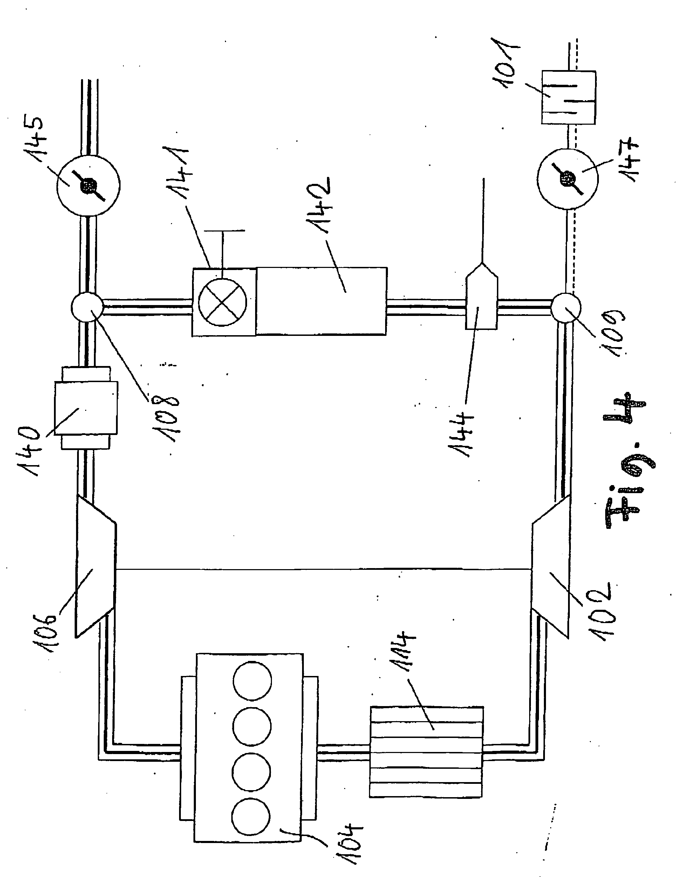

In den Figuren 4 bis 6 sind verschiedene Ausführungsbeispiele eines Niederdruck-Abgasrückführsystems vereinfacht dargestellt. Das Kraftstoff-Luftgemisch wird über einen Luftfilter 101 von einem Verdichter 102 angesaugt und einem Motor 104 zugeführt. Das Abgas des Motors 104 wird in einer Turbine 106 entspannt, die den Verdichter 102 antreibt. Stromabwärts der Turbine 106 ist eine Entnahmestelle 108 angeordnet, die mit einer Rückführstelle 109 in Verbindung steht. Die Rückführstelle 109 ist stromaufwärts des Verdichters 102 angeordnet. Zwischen den Verdichter 102 und den Motor 104 ist ein Ladeluftkühler 114 geschaltet. Zwischen die Turbine 106 und die Entnahmestelle 108 ist ein Dieselpartikelfilter 140 mit Oxidationskatalysator geschaltet Zwischen die Entnahmestelle 108 und die Rückführstelle 109 ist ein Wärmeübertragerventil 141, das auch als Kombinationsventil bezeichnet wird, geschaltet. Das Kombinationsventil 141 steht mit einem Abgaskühler 142 in Verbindung, der mit einem Bypass ausgestattet ist. Zwischen den Abgaskühler 142 und die Rückführstelle 109 ist ein Kondensatabscheider 144 geschaltet. In Strömungsrichtung im Anschluss an die Entnahmestelle 108 ist ein Abgasgegendruckventil 145 angeordnet. Zwischen die Rückführstelle 109 und den Luftfilter 101 ist eine Ladeluftdrossel 147 geschaltet.

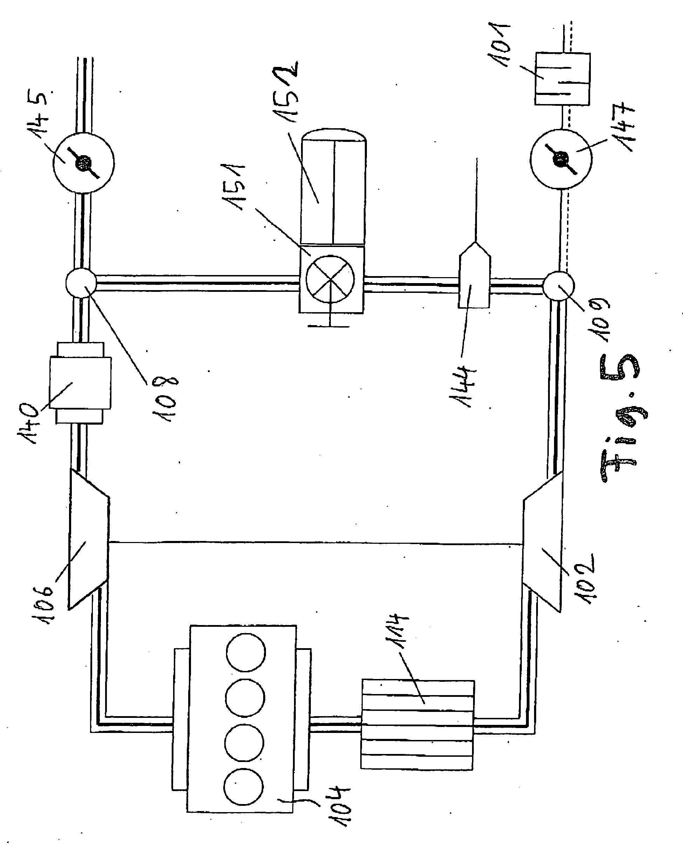

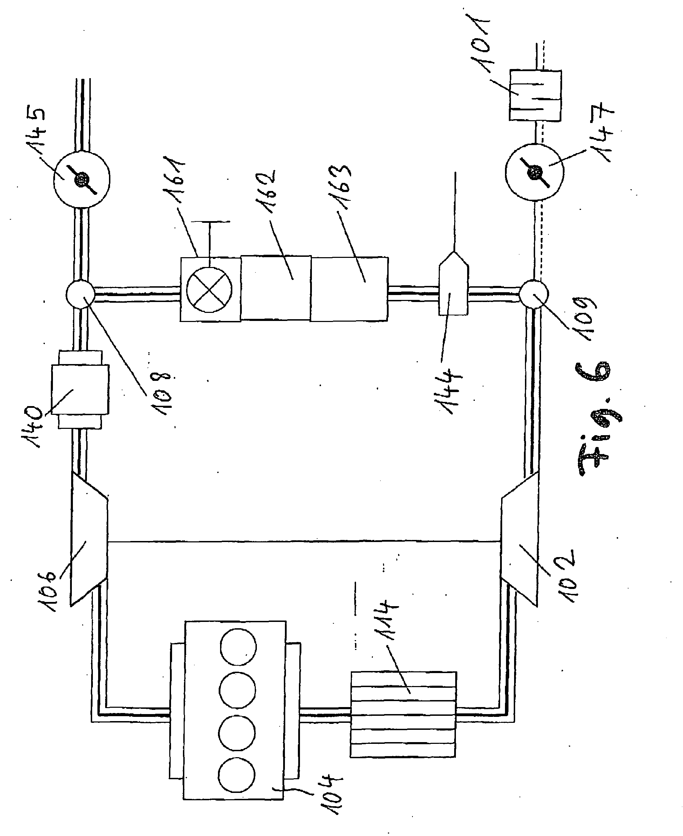

In den Figuren 5 und 6 sind ähnliche Niederdruck-Abgasrückführsysteme wie in Figur 4 dargestellt. Zur Bezeichnung gleicher Teile werden gleiche Bezugszeichen verwendet. Um Wiederholungen zu vermeiden, wird auf die vorangegangene Beschreibung der Figur 4 verwiesen. Im Folgenden wird nur auf die Unterschiede zwischen den einzelnen Ausführungsbeispielen eingegangen.

Bei dem in Figur 5 dargestellten Ausführungsbeispiel ist zwischen die Entnahmestelle 108 und die Rückführstelle 109 ein Wärmeübertragerventil 151, das auch als Kombinationsventil bezeichnet wird, geschaltet. Das Kombinationsventil 151 steht mit einem U-Flow-Kühler 152 in Verbindung. Je nach Schaltstellung des Kombinationsventils 151 gelangt das rückgeführte Abgas entweder direkt durch das Kombinationsventil 151 ungekühlt von der Entnahmestelle 108 zur Rückführstelle 109, oder das rückgeführte Abgas wird mittels des Kombinatiosnventils in den U-Flow-Kühler 152 geleitet, in dem U-Flow-Kühler 152 gekühlt und gelangt dann erst zur Rückführstelle 109.

Bei dem in Figur 6 dargestellten Ausführungsbeispiel sind zwischen die Entnahmestelle 108 und die Rückführstelle 109 ein Kombinationsventil 161 mit einer zweistufigen Abkühleinrichtung angeordnet, die einen Hochtemperatur-Abgaskühler 162 und einen Niedertemperatur-Abgaskühler 163 umfasst.

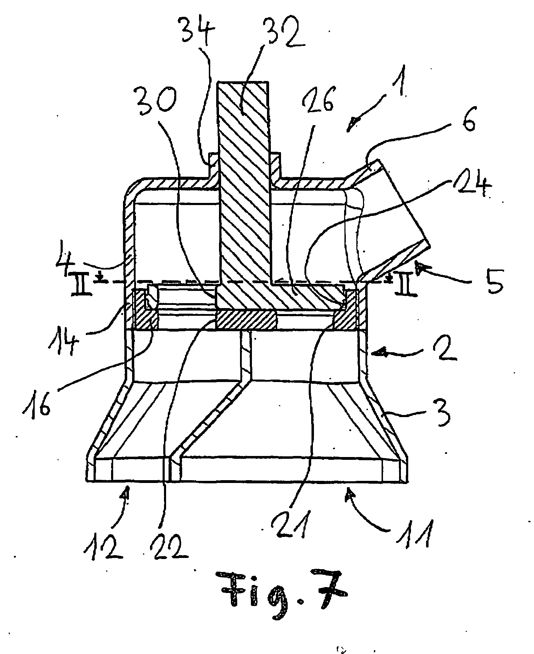

In den Figuren 7 bis 9 ist eine erfindungsgemäße Wärmeübertragerventileinrichtung 1 in verschiedenen Ansichten dargestellt. Die Wärmeübertragerventileinrichtung 1 umfasst ein Ventilgehäuse 2. Das Ventilgehäuse 2 ist aus einem Ventilgehäuseunterteil 3 und einem Ventilgehäuseoberteil 4 zusammengesetzt. Das Ventilgehäuseoberteil 4 ist mit einem Eingangsstutzen 6 für Ladeluft oder Abgas ausgestattet.

In dem Ventilgehäuseunterteil 3 sind ein Kühlerausgang 11 und ein Bypassausgang 12 vorgesehen. Der Kühlerausgang 11 steht mit einem (nicht dargestellten) Kühler in Verbindung, in dem das durch den Eingang 5 eintretende Fluid gekühlt wird. An den Bypassausgang 12 ist eine (nicht dargestellte) Bypassleitung angeschlossen, durch die das durch den Eingang 5 eintretende Fluid an dem Kühler vorbei geleitet wird.
Das Ventilgehäuseoberteil 4 weist an seinem dem Ventilgehäuseunterteil 3 zugewandten Umfangsrand einen Befestigungsabschnitt 14 auf, der mit einem Innengewinde ausgestattet ist. In das Innengewinde des Befestigungsabschnitts 14 ist eine Ventilscheibe 16 mit einem Außengewinde eingeschraubt. Durch die Schraubverbindung ist die Ventilscheibe 16 fest mit dem Ventilgehäuseoberteil 4 verbunden und wird daher auch als feststehende Ventilscheibe bezeichnet. Die feststehende Ventilscheibe 16 weist eine Kühlerdurchgangsöffnung 21 und eine Bypassdurchgangsöffnung 22 auf. Die Kühlerdurchgangsöffnung 21 ist oberhalb des Kühlerausgangs 11 angeordnet und steht mit diesem in Verbindung. Die Bypassdurchgangsöffnung 22 ist oberhalb des Bypassausgangs 12 angeordnet und steht mit diesem in Verbindung. In der Oberseite der feststehenden Ventilscheibe 16 ist eine kreisscheibenförmige Vertiefung 24 vorgesehen. In der Vertiefung 24 ist eine verdrehbare Ventilscheibe 26 verdrehbar gelagert. Die verdrehbare Ventilscheibe 26 weist eine Fluiddurchgangsöffnung 30 auf, die in der in Figur 1 dargestellten Stellung der verdrehbaren Ventilscheibe 26 oberhalb der Bypassdurchgangsöffnung 22 in der feststehenden Ventilscheibe 16 angeordnet ist. In dieser Stellung der verdrehbaren Ventilscheibe 26 ist die Kühlerdurchgangsöffnung 21 in der feststehenden Ventilscheibe 16 durch die verdrehbare Ventilscheibe 26 verschlossen. Somit ist sichergestellt, dass der durch den Eingang 5 eintretende Fluidstrom komplett durch die Fluiddurchgangsöffnungen 30 und 22 zu dem Bypassausgang 12 geleitet wird. In dem in den Figuren 7 bis 9 dargestellten Ausführungsbeispiel ist die Ventilscheibe 26 in der Ventilscheibe 16 angeordnet. Die beiden Ventilscheiben können auch übereinander angeordnet sein. Das heißt, die Scheibe 26 liegt auf der Scheibe 16. Beide Ventilscheiben können auch den gleichen Durchmesser aufweisen.

Auf der der feststehenden Ventilscheibe 16 abgewandten Seite der verdrehbaren Ventilscheibe 26 erstreckt sich eine Aktorstange 32 durch einen Führungsstutzen 34, der an dem Ventilgehäuseoberteil 4 vorgesehen ist, aus dem Ventilgehäuse 2 heraus nach draußen. Über die Aktorstange 32 kann die verdrehbare Ventilscheibe 26 mit Hilfe einer (nicht dargestellten) Aktoreinrichtung gezielt verdreht werden, um den Fluidstrom komplett oder nur teilweise vom Eingang 5 entweder zu dem Kühlerausgang 11 oder zu dem Bypassausgang 12 zu leiten. Die Aktorstange 32 ist dabei vorzugsweise fest mit der verdrehbaren Ventilscheibe 26 verbundnen. In einer weiteren nicht dargestellten Ausführungsform ist die Aktorstange 32 über einen Mitnehmer mit der Ventilscheibe 26 gekoppelt.

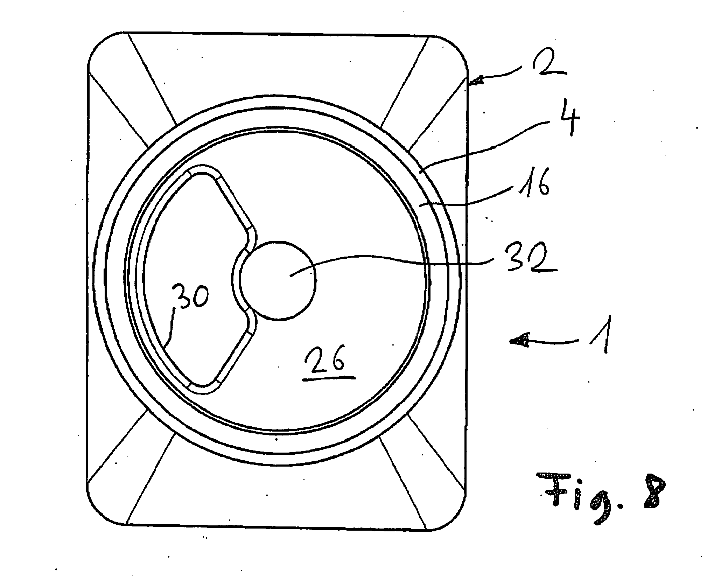

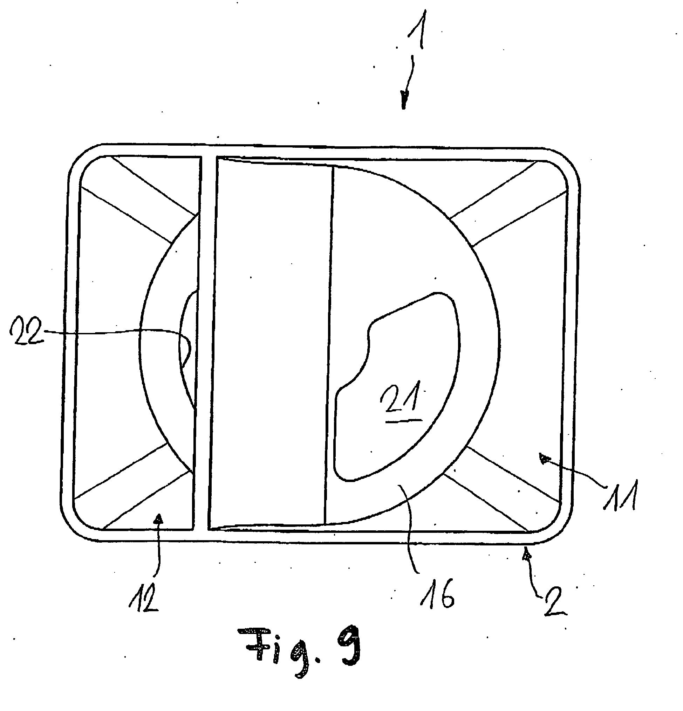

In den Figuren 8 und 9 sieht man, dass die Fluidöffnungen 21, 22 in der feststehenden Ventilscheibe 16 sowie die Fluidöffnung 30 in der verdrehbaren Ventilscheibe 26 jeweils die gleiche Kontur aufweisen. In Abhängigkeit vom Überdeckungsgrad der Fluiddurchgangsöffnung 30 mit einer der Fluiddurchgangsöffnungen 21, 22 kann der Durchtrittsquerschnitt des Fluidstroms geregelt werden.

Durch die erfindungsgemäße Wärmeübertragerventileinrichtung wird es auf einfache Art und Weise möglich, Fluidströme, insbesondere Abgasströme, mit hoher Dichtigkeit und mit nur einem Aktuator zu verteilen und zu regeln. Die verwendeten Ventilscheiben haben den Vorteil, dass sie wenig verschmutzungsanfällig sind. Darüber hinaus liefert die erfindungsgemäße Wärmeübertragerventileinrichtung den Vorteil, dass relativ preisgünstige Bauteile verwendet werden können, die auch hohe Temperaturen aushalten. Die Scheiben sind vorzugsweise strömungsgünstig gestaltet, zum Beispiel mit Vorrundungen ausgestattet.

Bei den Ventilscheiben handelt es sich vorzugsweise um Keramikscheiben. Die Oberfläche der Keramikscheiben gewährleistet eine hohe Dichtigkeit. Dadurch können weitere Dichtmittel entfallen. Durch die aneinander anliegenden Dichtscheiben kann verhindert werden, dass kleinere Schmutzpartikel zwischen diese beiden relativ zueinander beweglichen Ventilscheiben geraten. Somit wird die Verschmutzung durch Festkörper erschwert. Gemäß einem weiteren Ausführungsbeispiel kann eine Federeinrichtung verwendet werden, um die verdrehbare Ventilscheibe mit einer Anpresskraft gegen die feststehende Ventilscheibe zu drücken.

Je nach Anwendungsfall können die Fluiddurchgangsöffnungen in der feststehenden Ventilscheibe auch unterschiedlich groß sein. Die Größe der Fluiddurchgangsöffnungen hängt im Wesentlichen von dem benötigten Druckverlust ab, den man zum Einstellen einer optimalen Durchströmung benötigt. Die erfindungsgemäße Wärmeübertragerventileinrichtung ermöglicht unter anderem auch ein allmähliches Zuschalten des Fluidstroms. Die Fluiddurchgangsöffnungen sind im Wesentlichen nierenförmig ausgebildet. Vorzugsweise sind die Bypassöffnungen kleiner als die anderen Öffnungen.

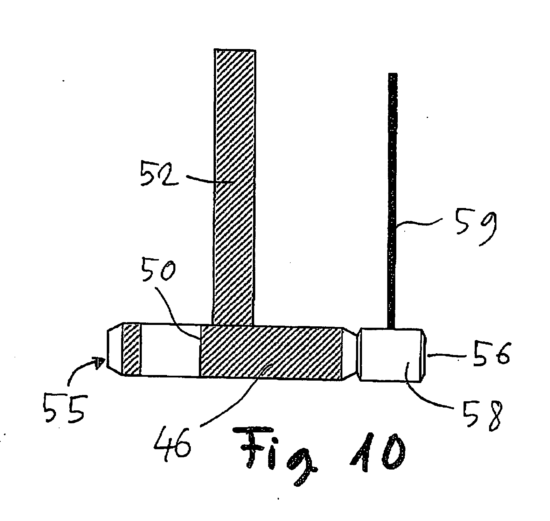

In Figur 10 ist eine verdrehbare Ventilscheibe 46 im Schnitt dargestellt. Die verdrehbare Ventilscheibe 46 weist eine Fluiddurchgangsöffnung 50 auf. Von der Ventilscheibe 46 geht eine Lagerstange 52 aus. Radial außen weist die Ventilscheibe 46 eine Außenverzahnung 55 auf, die sich mit einer weiteren Außenverzahnung 56 eines Antriebszahnrads 58 in Eingriff befindet. Das Antriebszahnrad 58 wiederum ist durch eine Antriebswelle 59 angetrieben, um die Ventilscheibe 46 definiert zu verdrehen.

## Patentansprüche

1. Wärmeübertragerventileinrichtung zum Regeln eines Abgas- oder Ladeluftstroms mit einem Ventilgehäuse (2), das einen Eingang (5) für den Abgas- oder Ladeluftstrom und einen Wärmeübertragerausgang (11) aufweist, durch den einem Wärmeübertrager, wie einem Kühler, in Abhängigkeit von der Stellung eines Ventilkörpers ein mehr oder weniger großer Abgas- oder Ladeluftstrom zugeführt wird, **dadurch gekennzeichnet, dass** das Ventilgehäuse (2) einen weiteren , Bypassausgang (12), aufweist, durch den in Abhängigkeit von der Stellung einer Ventilscheibe (26), die verdrehbar in dem Ventilgehäuse (2) aufgenommen ist, ein mehr oder weniger großer Abgas- oder Ladeluftstrom an dem Wärmeübertrager vorbei geleitet wird und die verdrehbare Ventilscheibe (26) eine Fluiddurchgangsöffnung (30) aufweist, die durch Verdrehen zumindest teilweise mit einer von zwei weiteren Fluiddurchgangsöffnungen (21,22) zur Deckung bringbar ist.

2. Wärmeübertragerventileinrichtung nach Anspruch 1, **dadurch gekennzeichnet, dass** die Ventilscheibe (26) zwischen einer ersten öffnungsstellung, in welcher der weitere Ausgang (12) geschlossen und der Wärmeübertragerausgang (11) geöffnet ist, und einer zweiten Öffnungsstellung verdrehbar ist, in welcher der weitere Ausgang (12) geöffnet und der Wärmeübertragerausgang (11) geschlossen ist.

3. Wärmeübertragerventileinrichtung nach einem der vorhergehenden Ansprüche, **dadurch gekennzeichnet, dass** in einer weiteren Ventilstellung der Ventilscheibe der weitere Ausgang (12) und der Wärmeübertragerausgang (11) geschlossen sind.

4. Wärmeübertragerventileinrichtung nach einem der vorhergehenden Ansprüche, **dadurch gekennzeichnet, dass** in einer weiteren Ventilstellung der Ventilscheibe der weitere Ausgang (12) und der Wärmeübertragerausgang (11) teilweise geöffnet sind.

5. Wärmeübertragerventileinrichtung nach einem der vorhergehenden Ansprüche, **dadurch gekennzeichnet, dass** in einer weiteren Ventilstellung der Ventilscheibe der weitere Ausgang (12) und der Wärmeübertragerausgang (11) geöffnet sind.

6. Wärmeübertragerventileinrichtung nach einem der vorhergehenden Ansprüche, **dadurch gekennzeichnet, dass** in einer weiteren Ventilstellung der Ventilscheibe der weitere Ausgang (12) geöffnet und der Wärmeübertragerausgang (11) geschlossen ist.

7. Wärmeübertragerventileinrichtung nach einem der vorhergehenden Ansprüche, **dadurch gekennzeichnet, dass** in einer weiteren Ventilstellung der Ventilscheibe der Wärmeübertragerausgang (11) geöffnet und der weitere Ausgang (12) geschlossen ist.

8. Wärmeübertragerventileinrichtung nach Anspruch 1, **dadurch gekennzeichnet, dass** eine der der Fluiddurchgangsöffnungen (21,22) in der feststehenden Ventilscheibe (16) mit dem Wärmeübertragerausgang (11) und die andere Fluiddurchgangsöffnung mit dem weiteren Ausgang (12) in Verbindung steht.

9. Wärmeübertragerventileinrichtung nach Anspruch 8, **dadurch gekennzeichnet, dass** die feststehende Ventilscheibe (16) eine Vertiefung (24) aufweist, in der die verdrehbare Ventilscheibe (26) geführt ist.

10. Wärmeübertragerventileinrichtung nach einem der Ansprüche 8 oder 9, **dadurch gekennzeichnet, dass** die feststehende Ventilscheibe (16) ein Außengewinde aufweist, mit dem die feststehende Ventilscheibe (16) in ein komplementär ausgebildetes Innengewinde des Ventilgehäuses (2) eingeschraubt ist.

11. Wärmeübertragerventileinrichtung nach einem der vorhergehenden Ansprüche, **dadurch gekennzeichnet, dass** von der verdrehbaren Ventilscheibe (26) eine Aktorstange (32) ausgeht.

12. Wärmeübertragerventileinrichtung nach einem der vorhergehenden Ansprüche, **dadurch gekennzeichnet, dass** die Ventilscheiben (16,26) zumindest teilweise aus Keramik gebildet sind.

13. Wärmeübertrager, insbesondere Abgaswärmeübertrager, mit einer Wärmeübertragerventileinrichtung (1) nach einem der vorhergehenden Ansprüche.

14. Abgasrückführsystem mit einer Brennkraftmaschine, insbesondere einem Motor, der beziehungsweise dem an einer Entnahmestelle (108) abgezweigtes und über eine Rückführstelle (109) zurückgeführtes Abgas zugeführt wird, **dadurch gekennzeichnet, dass** zwischen die Entnahmestelle (108) und die Rückführstelle (109) eine Wärmeübertragerventileinrichtung (111,121,131,141,151,161) nach einem der vorhergehenden Ansprüche geschaltet ist.

15. Abgasrückführsystem nach Anspruch 14, **dadurch gekennzeichnet, dass** die Wärmeübertragerventileinrichtung (111, 121, 131, 141, 151, 161) mit einer Abgaskühleinrichtung (112, 122, 132, 133, 142, 152, 162, 163) verbunden ist.

16. Abgasrückführsystem nach einem der Ansprüche 14 bis 15, **dadurch gekennzeichnet, dass** die Wärmeübertragerventileinrichtung (111, 121, 131, 141, 151, 161) in die Abgaskühleinrichtung (112, 122, 132, 133, 142, 152, 152, 163) integriert ist.

17. Abgasrückführsystem nach einem der Ansprüche 14 bis 16, **dadurch gekennzeichnet, dass** die Wärmeübertragerventileinrichtung (111, 121, 131, 141, 151, 161) stoffschlüssig mit der Abgaskühleinrichtung (112, 122, 132, 133, 142, 152, 162, 163) verbunden ist.

18. Abgasrückführsystem nach einem der Ansprüche 14 bis 17, **dadurch gekennzeichnet, dass** die Abgaskühleinrichtung (112, 132, 133, 142; 162, 163) einen Bypass aufweist.

19. Abgasrückführsystem nach einem der Ansprüche 14 bis 18, **dadurch gekennzeichnet, dass** die Abgaskühleinrichtung (122;152) einen U-Flow-Kühler umfasst.

20. Abgasrückführsystem nach einem der Ansprüche 14 bis 19, **dadurch gekennzeichnet, dass** die Wärmeübertragerventileinrichtung (111, 121,131,141,151,161), in Strömungsrichtung von der Entnahmestelle (108) zu der Rückführstelle (109) betrachtet, stromaufwärts zu der Abgaskühleinrichtung (112,122,132,133,142,152,162,163) angeordnet ist.

21. Abgasrückführsystem nach einem der Ansprüche 14 bis 20, **dadurch gekennzeichnet, dass** die Wärmeübertragerventileinrichtung (111, 129,131,141,151,161), in Strömungsrichtung von der Entnahmestelle (108) zu der Rückführstelle (109) betrachtet, stromabwärts zu der Abgaskühleinrichtung (112,122,132,133,142,152,162,163) angeordnet ist.

22. Abgasrückführsystem nach einem der Ansprüche 14 bis 21, **dadurch gekennzeichnet, dass** die Wärmeübertragerventileinrichtung (131,161) einen Hochtemperatur-Abgaskühler (132,162) und einen Niedertemperatur-Abgaskühler (133,163) umfasst.

23. Abgasrückführsystem nach einem der Ansprüche 14 bis 22, **dadurch gekennzeichnet, dass** die Wärmeübertragerventileinrichtung (131, 161), in Strömungsrichtung von der Entnahmestelle (108) zu der Rückführstelle (109) betrachtet, stromaufwärts oder stromabwärts zu dem Hochtemperatur-Abgaskühler (132,162) oder dem Niederdruckabgaskühler (133,163) angeordnet ist.

24. Abgasrückführsystem nach einem der Ansprüche 14 bis 23, **dadurch gekennzeichnet, dass** das Abgasrückführsystem von einem Hochdruck-Abgasrückführsystem gebildet wird.

25. Abgasrückführsystem nach einem der Ansprüche 14 bis 23, **dadurch gekennzeichnet, dass** das Abgasrückführsystem von einem Niederdruckabgasrückführsystem gebildet wird.

## Claims

1. A valve system for a heat exchanger for regulating an exhaust-gas or charge-air flow, comprising a valve housing (2) which has an inlet (5) for the exhaust-gas or charge-air flow, and a heat exchanger outlet (11), through which a more or less great exhaust-gas or charge-air flow is supplied to a heat exchanger, such as a radiator, depending on the position of a valve body,
**characterised in that** the valve housing (2) has a further bypass outlet (12), through which a more or less great exhaust-gas or charge-air flow is directed past the heat exchanger depending on the position of a valve disc (26) which is rotatably accommodated in the valve housing (2), and the rotatable valve disc (26) has a fluid port (30) which can be rotated to overlap, at least partially, one or two further fluid passage openings (21, 22).

2. The valve system for a heat exchanger according to claim 1, **characterized in that** the valve disc (26) can be rotated between, a first opening position, in which the other outlet (12) is closed and the heat exchanger outlet (11) is open, and a second opening position in which the other outlet (12) is open and the heat exchanger outlet (11) is closed.

3. The valve system for a heat exchanger according to one of the preceding claims, **characterized in that**, in a further valve position of the valve disc, the other outlet (12) and the heat exchanger outlet (11) are closed.

4. The valve system for a heat exchanger according to one of the preceding claims, **characterized in that**, in a further valve position of the valve disc, the other outlet (12) and the heat exchanger outlet (11) are partially open.

5. The valve system for a heat exchanger according to one of the preceding claims, **characterized in that**, in a further valve position of the valve disc, the other outlet (12) and the heat exchanger outlet (11) are open.

6. The valve system for a heat exchanger according to one of the preceding claims, **characterized in that**, in a further valve position of the valve disc, the other outlet (12) is open, and the heat exchanger outlet (11) is closed.

7. The valve system for a heat exchanger according to one of the preceding claims, **characterized in that**, in a further valve position of the valve disc, the heat exchanger outlet (11) is open, and the other outlet (12) is closed.

8. The valve system for a heat exchanger according to claim 1, **characterised in that** one of the fluid ports (21, 22) in the stationary valve disc (16) is connected to the heat exchanger outlet (11), and the other fluid port is connected to the other outlet (12).

9. The valve system for a heat exchanger according to claim 8, **characterized in that** the stationary valve disc (16) comprises a recess (24) in which the rotatable valve disc (26) is guided.

10. The valve system for a heat exchanger according to one of the claims 8 or 9, **characterized in that** the stationary valve disc (16) has an outer thread, via which the stationary valve disc (16) is screwed into a complementary inner thread of the valve housing (2).

11. The valve system for a heat exchanger according to one of the preceding claims, **characterized in that** and actuator rod (32) extends away from the rotatable valve disc (26).

12. The valve system for a heat exchanger according to one of the preceding claims, **characterized in that** the valve discs (16, 26) are made of ceramic, at least in part.

13. A heat exchanger, in particular an exhaust-gas heat exchanger, comprising a valve system for a heat exchanger (1) according to one of the preceding claims.

14. An exhaust-gas recirculation system comprising an internal combustion engine, in particular an engine, to which exhaust gas is supplied, which has branched off at a removal point (108) and is returned via a return point (109), **characterized in that** a valve system for a heat exchanger (111, 121, 131, 141, 151, 161) according to one on the preceding claims is connected between the removal point (108) and the return point (109).

15. The exhaust-gas recirculation system according to claim 14, **characterized in that** the valve system for a heat exchanger (111, 121, 131, 141, 151, 161) is connected to an exhaust-gas cooling device (112, 122, 132, 133, 142, 152, 162, 163).

16. The exhaust-gas recirculation system according to one of the claims 14 to 15, **characterized in that** the valve system for a heat exchanger (111, 121, 131, 141, 151, 161) is integrated in the exhaust-gas cooling device (112, 122, 132, 133, 142, 152, 162, 163).

17. The exhaust-gas recirculation system according to one of the claims 14 to 16, **characterized in that** the valve system for a heat exchanger (111, 121, 131, 141, 151, 161) is bonded to the exhaust-gas cooling device (112, 122, 132, 133, 142, 152, 162, 163).

18. The exhaust-gas recirculation system according to one of the claims 14 to 17, **characterized in that** the exhaust-gas cooling device (112, 122, 132, 133, 142, 152, 162, 163) comprises a bypass.

19. The exhaust-gas recirculation system according to one of the claims 14 to 18, **characterised in that** the exhaust-gas cooling device (122; 152) comprises a U-flow cooler.

20. The exhaust-gas recirculation system according to one of the claims 14 to 19, **characterized in that** the valve system for a heat exchanger (111, 121, 131, 141, 151, 161), as seen in the direction of flow from the removal point (108) to the return point (109), is disposed upstream of the exhaust-gas cooling device (112, 122, 132, 133, 142, 152, 162, 163).

21. The exhaust-gas recirculation system according to one of the claims 14 to 20, **characterised in that** the valve system for a heat exchanger (111, 121, 131, 141, 151, 161), as seen in the direction of flow from the removal point (108) to the return point (109), is disposed downstream of the exhaust-gas cooling device (112, 122, 132, 133, 142, 152, 162, 163).

22. The exhaust-gas recirculation system according to one of the claims 14 to 21, **characterized in that** the valve system for a heat exchanger (131, 161) comprises a high-temperature exhaust-gas cooler (132, 162) and a low-temperature exhaust-gas cooler (133, 163).

23. The exhaust-gas recirculation system according to one of the claims 14 to 22, **characterized in that** the valve system for a heat exchanger (131, 161), as seen in the direction of flow from the removal point (108) to the return point (109), is disposed upstream or downstream of the high-temperature exhaust-gas cooler (132, 162) or the low-pressure exhaust-gas cooler (133, 163).

24. The exhaust-gas recirculation system according to one of the claims 14 to 23, **characterized in that** the exhaust-gas recirculation system is formed by a high-pressure exhaust-gas recirculation system.

25. The exhaust-gas recirculation system according to one of the claims 14 to 23, **characterized in that** the exhaust-gas
recirculation system is formed by a low-pressure exhaust-gas recirculation system.

## Revendications

1. Dispositif de soupape d'échangeur de chaleur servant au réglage d'un flux de gaz d'échappement ou d'air de suralimentation, comprenant une cage de soupape (2) qui présente une entrée (5) pour le flux de gaz d'échappement ou d'air de suralimentation, et une sortie d'échangeur de chaleur (11) par laquelle est fourni à un échangeur de chaleur, tel qu'un refroidisseur, un flux de gaz d'échappement ou d'air de suralimentation plus ou moins important, en fonction de la position d'un corps de soupape,
**caractérisé en ce que** la cage de soupape (2) présente une autre sortie de dérivation (12) par laquelle est dirigé un flux de gaz d'échappement ou d'air de suralimentation plus ou moins important passant devant l'échangeur de chaleur, en fonction de la position d'un disque de soupape (26) qui est logé en rotation dans la cage de soupape (2), et le disque rotatif (26) de la soupape présente une ouverture de passage de fluide (30) qui, par rotation, peut venir correspondre au moins partiellement à l'une des deux autres ouvertures de passage de fluide (21, 22).

2. Dispositif de soupape d'échangeur de chaleur selon la revendication 1, **caractérisé en ce que** le disque (26) de la soupape peut être déplacé et rotation, passant d'une première position d'ouverture dans laquelle est fermée l'autre sortie (12) et ouverte la sortie (11) de l'échangeur de chaleur, à une deuxième position d'ouverture dans laquelle est ouverte l'autre sortie (12) et fermée la sortie (11) de l'échangeur de chaleur.

3. Dispositif de soupape d'échangeur de chaleur selon l'une ou l'autre des revendications précédentes, **caractérisé en ce que** l'autre sortie (12) et la sortie (11) de l'échangeur de chaleur sont fermées dans une autre position de la soupape du disque de soupape.

4. Dispositif de soupape d'échangeur de chaleur selon l'une quelconque des revendications précédentes, **caractérise en ce que** l'autre sortie (12) et la sortie (11) de l'échangeur de chaleur sont partiellement ouvertes dans une autre position de la soupape du disque de soupape.

5. Dispositif de soupape d'échangeur de chaleur selon l'une quelconque des revendications précédentes, **caractérisé en ce que** l'autre sortie (12) et la sortie (11) de l'échangeur de chaleur sont ouvertes dans une autre position de la soupape du disque de soupape.

6. Dispositif de soupape d'échangeur de chaleur selon l'une quelconque des revendications précédentes, **caractérisé en ce que** l'autre sortie (12) est ouverte, et fermée la sortie (11) de l'échangeur de chaleur dans une autre position de la soupape du disque de soupape.

7. Dispositif de soupape d'échangeur de chaleur selon l'une quelconque des revendications précédentes, **caractérisé en ce que** la sortie (11) de l'échangeur de chaleur est ouverte, et fermée l'autre sortie (12) dans une autre position de la soupape du disque de soupape.

8. Dispositif de soupape d'échangeur de chaleur selon la revendication 1, **caractérisé en ce que** l'une des ouvertures de passage de fluide (21, 22) placée dans le disque fixe (16) de la soupape communique avec la sortie (11) de l'échangeur de chaleur l'autre ouverture de passage de fluide communiquant avec l'autre sortie (12).

9. Dispositif de soupape d'échangeur de chaleur selon la revendication 8, **caractérisé en ce que** le disque fixe (16) de la soupape présente une cavité (24) dans laquelle est guidé le disque rotatif (26) de la soupape.

10. Dispositif de soupape d'échangeur de chaleur selon l'une des revendications 8 ou 9, **caractérisé en ce que** le disque fixe (16) de la soupape présente un filetage extérieur avec lequel le disque fixe (16) de la soupape est vissé dans un filetage intérieur - configuré de façon complémentaire - de la cage de soupape (2).

11. Dispositif de soupape d'échangeur de chaleur selon l'une quelconque des revendications précédentes, **caractérisé en ce qu'**une tige d'actionneur (32) sort du disque rotatif (26) de la soupape.

12. Dispositif de soupape d'échangeur de chaleur selon l'une quelconque des revendications précédentes, **caractérisé en ce que** les disques (16, 26) de la soupape sont formés au moins partiellement en céramique.

13. Echangeur de chaleur, en particulier échangeur de chaleur de gaz d'échappement, comprenant un dispositif de soupape d'échangeur de chaleur (1) selon l'une quelconque des revendications précédentes.

14. Système de recyclage des gaz d'échappement avec un moteur à combustion interne, en particulier un moteur thermique, à l'un ou l'autre desquels sont fournis, respectivement, des gaz d'échappement déviés au niveau d'un point de captage (108) et recyclés via un point de recyclage (109),
**caractérisé en ce qu'**un dispositif de soupape d'échangeur de chaleur (111, 121, 131, 141, 151, 161) selon l'une quelconque des revendications précédentes est monté entre le point de capsage (108) et le point de recyclage (109).

15. Système de recyclage des gaz d'échappement selon la revendication 14, **caractérisé en ce que** le dispositif de soupape d'échangeur de chaleur (111, 121, 131, 141, 151, 161) est raccordé à un dispositif de refroidissement des gaz d'échappement (112, 122, 132, 133, 142, 152, 162, 163).

16. Système de recyclage des gaz d'échappement selon l'une des revendications 14 ou 15, **caractérisé, en ce que** le dispositif de soupape d'échangeur de chaleur (111, 121, 131 141, 151, 161) est intégré au dispositif de refroidissement des gaz d'échappement (112, 122, 132, 133, 142, 152, 162, 163).

17. Système de recyclage des gaz d'échappement selon l'une quelconque des revendications 14 à 16, **caractérisé en ce que** le dispositif de soupape d'échangeur de chaleur (111, 121, 131, 141, 151, 161) est assemblé par continuité de matière avec le dispositif de refroidissement des gaz d'échappement (112, 122, 132, 133, 142, 152, 162, 163).

18. Système de recyclage des gaz d'échappement selon l'une quelconque des revendications 14 à 17, **caractérisé en ce que** le dispositif de refroidissement des gaz d'échappement (112, 132, 133, 142 ; 162, 163) présente une dérivation,

19. Système de recyclage des gaz d'échappement selon l'une quelconque des revendications 14 à 18, **caractérisé en ce que** le dispositif de refroidissement des gaz d'échappement (122 ; 152) présente un refroidisseur à écoulement en U.

20. Système de recyclage des gaz d'échappement selon l'une quelconque des revendications 14 à 19, **caractérisé en ce que** le dispositif de soupape d'échangeur de chaleur (111, 121, 131, 141, 151, 161) est disposé en amont du dispositif de refroidissement des gaz d'échappement (112, 122, 132, 133, 142, 152, 162, 163), en regardant dans la direction d'écoulement depuis le point de captage (108) point de recyclage (109).

21. Système de recyclage des gaz d'échappement selon l'une quelconque des revendications 14 à 20, **caractérisé en ce que** le dispositif de soupape d'échangeur de chaleur (111, 121, 131, 141, 151, 161) est disposé en aval du dispositif de refroidissement des gaz d'échappement (112, 122, 132, 133, 142, 152, 162, 163), en regardant dans la direction d'écoulement depuis le point de captage (108) jusqu'au point de recyclage (109).

22. Système de recyclage des gaz d'échappement selon l'une quelconque des revendications 14 à 21, **caractérisé en ce que** le dispositif de soupape d'échangeur de chaleur (131, 161) comprend un refroidisseur des gaz d'échappement à haute température (132, 162) et un refroidisseur des gaz d'échappement à basse température (133, 163).

23. Système de recyclage des gaz d'échappement selon l'une quelconque des revendications 14 à 22, **caractérisé en ce que** le dispositif de soupape d'échangeur de chaleur (131, 161) est disposé en amont ou en aval du refroidisseur des gaz d'échappement à haute température (132, 162) ou du refroidisseur des gaz d'échappement à basse température (133, 163), en regardant dans la direction d'écoulement depuis le point de captage (108) jusqu'au point de recyclage (109).

24. Système de recyclage des gaz d'échappement selon l'une quelconque des revendications 14 à 23, **caractérisé en ce que** le système de recyclage des gaz d'échappement est formé par un système de recyclage des gaz d'échappement à haute pression.

25. Système de recyclage des gaz d'échappement selon l'une quelconque des revendications 14 à 23, **caractérisé en ce que** le système de recyclage des gaz d'échappement est formé par un système de recyclage des gaz d'échappement à basse pression.
